# EUROPEAN PATENT APPLICATION

(11) **EP 1 927 670 A1**
(43) Date of publication of application: **04.06.2008**
(21) Application number: 06125030.4
(22) Date of filing: 29.11.2006
(51) Int. Cl.: C23C 4/06, C23C 4/12, C23C 28/00, C23C 30/00, C22C 19/07, F04D 29/02, F16C 33/12

(54) **Wear resistant coatings**

(71) Applicant: General Electric Company, Schenectady, NY 12345 (US)
(72) Inventor: Krishnamurthy, Anand, 560005 Karnataka (IN); Bruce, Robert William, Loveland, OH 45140 (US); Srinidhi, Sampath, 560075 Karnataka (IN); Srinivasan, Dheepa, 560003 Karnataka (IN); Gray, Dennis Michael, Delanson, NY 12053 (US)
(74) Representative: Illingworth-Law, William Illingworth

(57) **Abstract**

A wear resistant coating (116) including a hard backing (118) including a metal alloy matrix dispersed with a plurality of hard particles; and a plurality of nano-layers (120) disposed on the hard backing (118) is provided. The plurality of nano-layers (120) has different characteristics from one another. A method of making a wear resistant coating (116) is provided. The method includes the steps of providing a substrate; disposing a hard backing (118); and disposing a plurality of nano-layers (120) on the hard backing (118).

## Description

### BACKGROUND

The present technique relates generally to wear resistant coatings. More particularly, embodiments of the present technique relate to low friction, wear resistant coatings that are stable in high temperature applications, such as gas turbine aircraft engines that may be subjected to temperatures from about -40 degree centigrade to about 900 degrees centigrade.

Wear resistant coatings are used extensively to improve the hardness and wear behavior of the base material in many structural applications including cutting tools, automotive parts, and turbine parts. Frequently, aircraft and helicopters equipped with gas turbine engines operate in high temperature, low humidity, and corrosive atmospheres. For example, in gas turbine aircraft engines, the variable stator vanes used for regulating airflow through the compressor are exposed to temperatures as high as 500 degree centigrade during take off. These variable stator vanes are also subjected to considerable loads between the vanes and bushings supporting the vanes. For example, the loads may include radial loads up to about 150 lbs and axial loads of up to about 20 lbs as a result of forces exerted by the airflow across the vanes. Commercial engines reach altitudes on the order of 40,000 feet, and at such levels, the availability of moisture is very low. In the absence of adequate amounts of moisture, conventional lubricants, such as graphite, lose their efficacy resulting in undesirable friction and wear between the stator vanes and bushings, among other components. Therefore, a technique is needed for lubricating and protecting these components from undesirable wear at a variety of operational conditions, including high temperatures, high altitudes, low humidity, and so forth.

Therefore, there is a need for improved wear resistant coatings that can operate under these severe conditions.

### SUMMARY OF THE INVENTION

In one aspect, the embodiments of the invention provides a wear resistant coating including a hard backing including a metal alloy matrix dispersed with a plurality of hard particles; and a plurality of nano-layers disposed on the hard backing. The plurality of nano-layers has different characteristics from one another.

In another aspect, the embodiments of the invention provide a method of making a wear resistant coating. The method includes the steps of providing a substrate; disposing a hard backing; and disposing a plurality of nano-layers on the hard backing. The plurality of nano-layers has different characteristics from one another.

In another aspect, the embodiments of the invention provide an article. The article comprises a component; a wear resistant coating disposed on the component. The wear resistant coating includes a hard backing including a metal alloy matrix dispersed with a plurality of hard particles; and a plurality of nano-layers disposed on the hard backing.

In an exemplary embodiment, the invention provides an engine including a variable stator vane assembly consisting of a bushing or a pair of bushings, and a vane stem, referred to as a trunnion. The bushing has an inner surface in contact with an outside surface of the trunnion. The inner surface of the bushing and the outer surface of the variable stator vane are coated with a wear resistant coating including a hard backing including a metal alloy matrix dispersed with a plurality of hard particles; and a plurality ofnano-layers disposed on the hard backing.

These and other aspects, advantages, and salient features of embodiments of the present invention will become apparent from the following detailed description, provided by way of example only, the accompanying drawings, and the appended claims.

### BRIEF DESCRIPTION OF FIGURES

FIG. 1 is a schematic illustration of a gas turbine engine in accordance with embodiments of the present technique;
FIG. 2 is a partial schematic view of a gas turbine engine compressor in accordance with embodiments of the present technique;
FIG 3 is an exploded view of a typical variable stator vane assembly in accordance with embodiments of the present technique;
FIG. 4 is a schematic view of a system having a wear surface between a bushing and a shaft in accordance with embodiments of the present technique;
FIG. 5 is a schematic view of a system having a wear surface between a bushing and a shaft in accordance with embodiments of the present technique;
FIG. 6 is a cross sectional side view of a structure having a wear resistant coating in accordance with one embodiment of the present technique;
FIG. 7 is a cross sectional side view of a structure having a wear resistant coating in accordance with another embodiment of the present technique;
FIG. 8 is a flow diagram of the method of making a wear resistant coating in accordance with embodiments of the present technique;
FIG. 9 is a plot of wear on components coated with different wear resistant coatings in accordance with one embodiment of the present technique; and
FIG. 10 is a plot of wear on components coated with different wear resistant coatings in accordance with another embodiment of the present technique.

### DETAILED DESCRIPTION

In the following description, like reference characters designate like or corresponding parts throughout the several views shown in the figures. It is also understood that terms such as "top," "bottom," "outward," "inward," "over," and the like are words of convenience and are not to be construed as limiting terms. Furthermore, whenever a particular aspect of the invention is said to comprise or consist of at least one of a number of elements of a group and combinations thereof, it is understood that the aspect may comprise or consist of any of the elements of the group, either individually or in combination with any of the other elements of that group.

As used herein, a hard backing is a layer with a hardness value of at least about 700 Vickers Hardness. As used herein, a nano-layer is understood to be a layer, which has a layer thickness less than, for example, 500 nanometers. In certain embodiments, the nano-layer may have a thickness less than 400 nanometers, or less than 300 nanometers, or less than 200 nanometers, or less than 100 nanometers. In some embodiments, a number of such nano-layers may be disposed one over the other, thereby producing a conglomeration of multiple nano-layers with a potentially greater overall thickness.

In compressors, such as those used in turbine engines, variable stator vanes perform the function of regulating airflow through compressors by performing angular actuation. These variable stator vanes are actuated through control systems to ensure optimum operation of the high-pressure compressor without stalls. The following characteristics may improve the operational reliability and performance of these systems: a) Low fretting and sliding wear, b) Actuate at a friction that is low enough for the actuation system to operate, c) Not to undergo galling or seizure, d) be thermally stable, and e) operate at high altitudes where the humidity levels are very low. Some embodiments of the present invention are directed towards wear resistant coatings to protect such components. Moreover, the disclosed embodiments may be used in other stationary and moving components, such as stator vane stem-bushing assembly in centrifugal and reciprocating compressors, in vanes and stems in industrial gas turbine and aero-derivative engines, in fan blade-dovetail pin assemblies, piston rings, and cam-rocker arm etc.

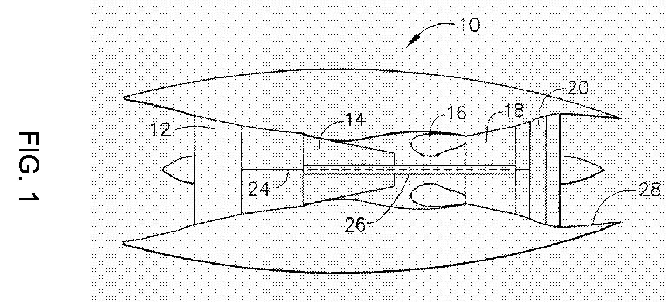

FIG. 1 is a schematic illustration of a gas turbine engine 10 having one or more of wear resistant coatings of the invention disposed on the various components as discussed in detail below. For example, wear resistant coating may include a hard backing including a metal alloy matrix dispersed with a plurality of hard particles; and a plurality of nano-layers disposed on the hard backing. The illustrated gas turbine engine 10 includes a low-pressure compressor 12, a high-pressure compressor 14, and a combustor 16. Engine 10 also includes a high-pressure turbine 18 and a low-pressure turbine 20. Compressor 12 and turbine 20 are coupled by a first shaft 24, and compressor 14 and turbine 18 are coupled by a second shaft 26. During operation, air flows through low-pressure compressor 12 and compressed air is supplied from low-pressure compressor 12 to high-pressure compressor 14. The highly compressed air is delivered to combustor 16. Gas flow from combustor 16 drives turbines 18 and 20 before exiting gas turbine engine 10. Again, the one or more of wear resistant coatings of the invention may be disposed on the various components to improve wear resistance under various operational conditions of the gas turbine engine 10.

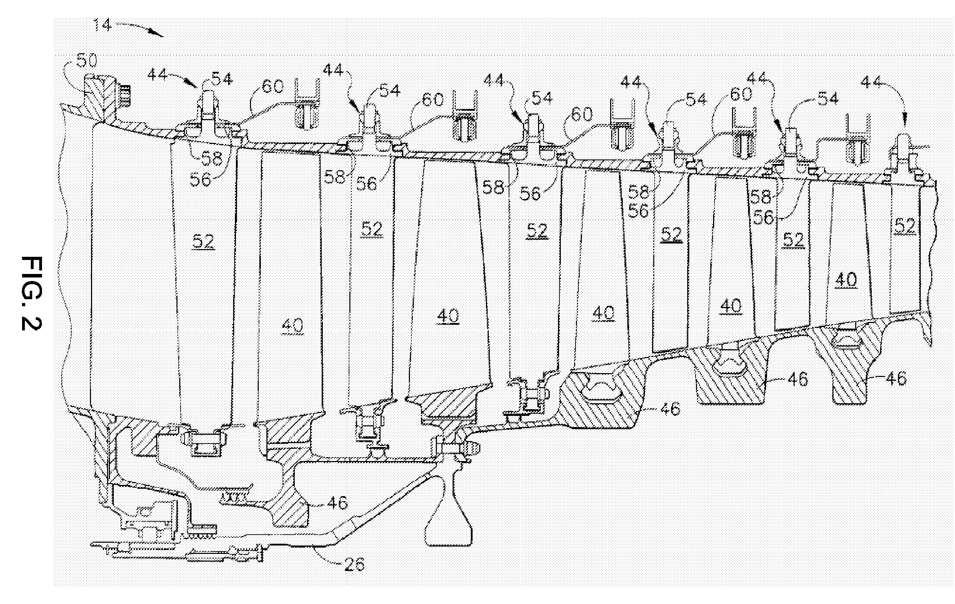

FIG. 2 is a partial schematic view of an embodiment of the gas turbine engine compressor 14 as illustrated in FIG. 1, wherein the various surfaces may be coated with one or more wear resistant coatings of the invention. For example, the wear resistant coating may include a hard backing including a metal alloy matrix dispersed with a plurality of hard particles; and a plurality of nano-layers disposed on the hard backing. Compressor 14 includes a plurality of stages, and each stage includes a row of rotor blades 40 and a row of variable vane assemblies 44. In an exemplary embodiment, rotor blades 40 are supported by rotor disks 46 and are coupled to a rotor shaft 26. Rotor shaft 26 is surrounded by a casing 50 that extends circumferentially around compressor 14 and supports variable vane assemblies 44. Variable vane assemblies 44 each include a variable vane 52 and a vane stem 54 that extends substantially perpendicularly from a vane platform 56. More specifically, vane platform 56 extends between variable vane 52 and vane stem 54. Each vane stem 54 extends through a respective opening 58 defined in casing 50. Casing 50 includes a plurality of openings 58. Variable vane assemblies 44 also include a lever arm 60 that extends from each variable vane 52 and is utilized to selectively rotate variable vanes 52 for changing an orientation of vanes 52 relative to the flow path through compressor 14 to facilitate increased control of air flow through compressor 14. Again, one or more of these components, among others, may include one or more wear resistant coatings as discussed in further detail below.

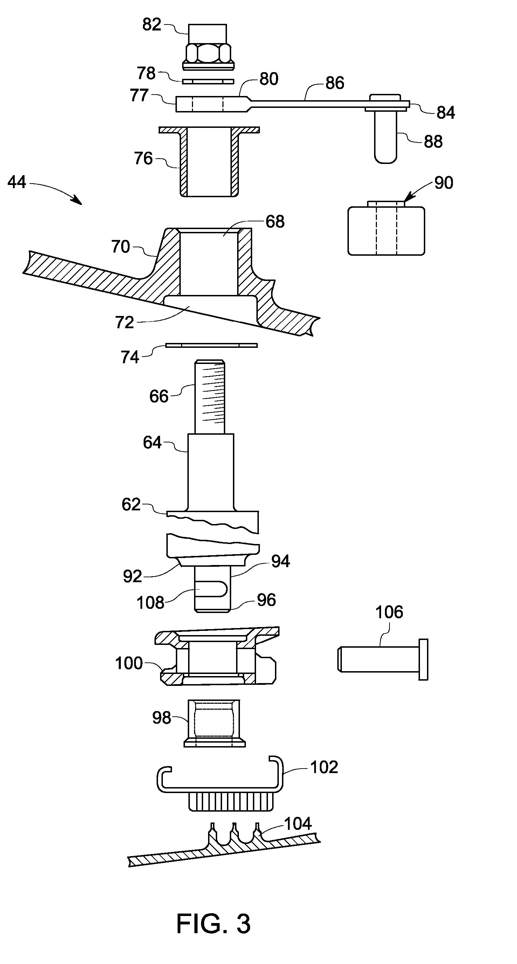

FIG. 3 is an exploded view of a variable vane assembly 44 that may include one or more wear resistant coatings in accordance with certain embodiments of the present technique. Vane airfoil 62 is shown as a cutaway. Integral vane stem 64 is located at a radially outer end of vane airfoil 62. Vane stem 64 includes an attachment mechanism 66 depicted here as a threaded connection, although any other equivalent connection method such as a spline arrangement may be used. Vane stem 64 extends through opening 68 in casing 70, again shown as a cutaway. Opening 68 includes a counterbore 72, which receives an inner washer 74. A bushing 76 slides into opening 68 and over upper vane stem 64, filling the remaining space in opening 68 and improving the sliding engagement between casing 70 and upper vane stem 64. This inner washer 74 may be replaced by the flange of a flanged rotating bushing, in which case a washer (not shown) would separate the lever arm 77 from the case. A first end 80 of lever arm 77 is assembled over vane stem 64 and is secured to vane stem 64 by a fastening mechanism 82, here depicted as a locknut. A washer 78 may be provided between level arm 77 and fastening mechanism 82. The fastening mechanism 82 mates cooperatively with attachment mechanism 66, depicted as a threaded end of upper vane stem 64, to secure attachment mechanism 66 to vane stem 64. Lever arm 77 includes a second end 84 that is integrally attached to the first end 80 by a web 86. A projection 88 extends from second end 84 and is received by an aperture in an actuation ring. A second bushing 90 fits over projection 88 and into the aperture in actuation ring to improve the sliding engagement between actuation ring and projection 88.

At the radially inner end of vane assembly 44, an integral lower vane shaft 92 extends radially inward from vane airfoil 62. Vane shaft 92 includes a first, large diameter shaft 94 and a second smaller diameter shaft 96. A second bushing 98 is assembled over lower vane shaft 94, which is received by an optional shroud 100. A seal 102 is assembled radially inward of the shroud 100, which seal 102 is contacted by teeth 104 positioned on the rotating apparatus of the engine. The teeth 104 wear into seal 102 to form a barrier to air leakage. An optional third fastening mechanism 106, depicted as a locking pin, extends through at least one boundary of seal 102, through shroud 100, through second bushing 98 through aperture 108 in lower vane shaft 94. When an optional fastening mechanism 106 is employed, any other mechanical fastening mechanism, such as for example a threaded bolt and locknut may be substituted for the lock pin. Optionally, a washer is placed between the axial faced large diameter 92 and shroud 100.

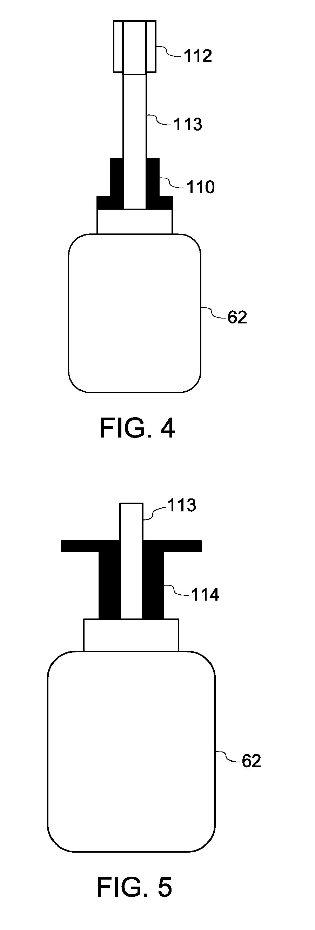

An exploded view of a section of an airfoil 62 including inner bushing 110 and an outer bushing 112 along with trunnion 113 is shown in FIG. 4. In some embodiments, the airfoil 62 may include only one bushing 114 as shown in FIG. 5. The bushings and washers may be fabricated by a variety of techniques, such as by injection molding or by high temperature sintering of ceramics. The bushings are generally durable with good wear characteristics. In certain embodiments, the bushings are made of an inexpensive wear material, which is easily replaceable and designed as a consumable item. To determine the type of bushing for a particular design, physical properties, such as, for example, thermal expansion coefficient, operating temperature range, yield strength and elastic modulus of the mating materials, the forces exerted on the mating materials, wear per cycle, and the number of cycles over the expected life are used to determine the relative wear that will be experienced in an application. The wear resistant coating according to some embodiments of the present invention applied on the inner surface of the bushings 114, 110, or 112 and on the outer surface of trunnion 113 generally prevents or substantially minimizes the wear loss and protects the components.

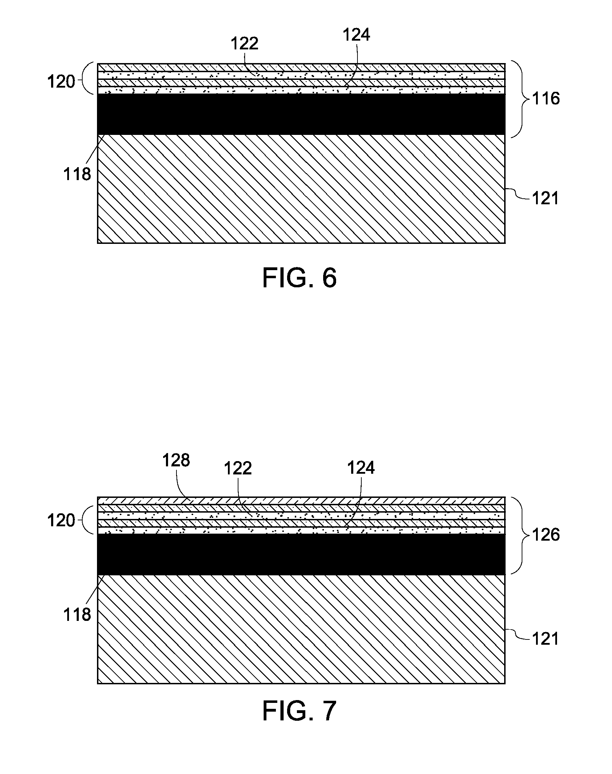

The foregoing systems and components may be coated with one or more wear resistant coatings, such as those illustrated with reference to FIGS. 6 and 7. Turning first to FIG. 6, one embodiment of a wear resistant coating 116 includes a hard backing 118 and a plurality of nano-layers 120. Specifically, the hard backing 118 includes a metal alloy matrix dispersed with a plurality of hard particles, wherein the hard backing is disposed on a substrate 121. In turn, the plurality of nano-layers 120 is disposed on the hard backing 118. The hard backing 118 improves the wear resistance of the nano-layers 120 and substantially protects the substrate 121 from damage under friction. The substrate 121 may be any one of the components described in detail above with reference to FIGS. 1-5, or it may be a device or component for another application or system.

In one embodiment, the hard backing 118 has a hardness value of greater than about 700 Vickers Hardness, in another embodiment the hardness value is greater than about 800 Vickers Hardness, in another embodiment the hardness value is greater than about 900 Vickers Hardness, in another embodiment the hardness value is greater than about 1000 Vickers Hardness, in yet another embodiment the hardness value is greater than about 1200 Vickers Hardness. The hard backing 118 includes one or more materials selected to generally maintain or improve the corrosion resistance of the substrate material and it depends on the utility and application of the coated article. The hard backing 118 is characterized by adequate toughness and crushing strength, stability up to the operating temperature of the coated article, oxygen resistance, and compatibility with the top nano-layers 120.

The hard backing 118 can include a variety of suitable metal alloy matrices, such as cobalt, cobalt-based superalloys, nickel-based superalloys, or ferrous-based superalloys. Such a superalloy may be formed of a nickel-based, ferrous-based, or a cobalt-based alloy, wherein nickel, iron, or cobalt is generally the greatest element in the superalloy by weight. Illustrative nickel-base superalloys include at least about 40 percent by weight of nickel, and some percentage of cobalt, or chromium, or aluminum, or tungsten, or molybdenum, or titanium, or iron, or any combination thereof. Examples of nickel-base superalloys are designated by the trade names Inconel®, Nimonic®, Rene® (e.g., Rene®80-, Rene®95, Rene®142, and Rene®N5 alloys), and Udimet®, and include directionally solidified and single crystal superalloys. (INCONEL®, Nimonic®, and Udimet® are registered trademarks of the Special Metals Corporation family of companies, Rene® is the registered trade mark of General Electric Company.) Illustrative cobalt-base superalloys include at least about 30 percent by weight of cobalt, and some percentage of nickel, or chromium, or aluminum, or tungsten, or molybdenum, or titanium, or iron, or any combination thereof. Examples of cobalt-based superalloys are designated by the trade names Haynes®, Nozzaloy®, Stellite®, and Ultimet® (Haynes® and Ultimet® are the registered trademarks of Haynes International, Inc, STELLITE® is a registered trademark of DELORO STELLITE COMPANY, INC). In some embodiments, the hard backing 118 includes nickel chromium aluminum alloy, or cobalt nickel chromium aluminum yttrium alloy, or nickel cobalt chromium tungsten alloy, or cobalt molybdenum chromium silicon alloy consisting of solid solution strengthened cobalt base matrix and an interpenetrating network of laves phase, consisting of about 25% or more of molybdenum, 6% or more of chromium and greater than 2% of silicon.

In the above embodiments, the metal matrix of the hard backing 118 is dispersed with a plurality of hard particles. The hard particles may include one or more of metal nitrides, or metal carbides, or metal borides, or combinations thereof. In certain embodiments, the metal matrix may be dispersed with particles of tungsten carbide, or titanium carbide, or chromium carbide, or silicon carbide, or diamond, or titanium nitride, or silicon nitride, or cubic boron nitride, or titanium boride, or chromium oxide, or aluminium oxide, or zirconium oxide, or silicon oxide, or zirconium oxide, or combinations thereof. The plurality of hard particles has an average particle size in the range of from about 100 nanometers to about 2 microns. In some embodiments, the average particle size is in a range of from about 100 nanometers to about 2000 nanometers with a significant portion of particles having particle size in the range of from about 100 nanometers to about 400 nanometers and the remaining particles having particle size less than about 2000 nanometers, and in other embodiments less than about 1000 nanometers. The particles which are sized between about 100 nanometers to about 400 nanometers may tend to strengthen the matrix and those less about 1000 nm may provide wear protection without making the coating abrasive with respect to the counterface material. The plurality of hard particles have a volume fraction in a range of from about 30 volume percent to about 70 volume percent of the total volume of the hard backing 118. In some embodiments, the percentage of hard particles relative to the total volume of the hard backing 118 ranges between about 35 volume percent and about 65 volume percent, and in other embodiments between about 40 volume percent and about 60 volume percent, and in other embodiments between about 45 volume percent and about 55 volume percent. The spacing between the plurality of hard particles in one embodiment is in the range of from about 100 nm to about 700 nm, and in another embodiment it is from about 100 nanometers to about 500 nanometers. The hard backing 118 has a thickness in the range of from about 5 micrometers to about 500 micrometers. The thickness of the hard backing would depend on the loading exerted on the coating. In applications where the force exerted is higher, the hard backing would have to be thicker to support the nano-layer coating. In an exemplary embodiment, the hard backing 118 including a metallic matrix and a plurality of hard particles dispersed in the metallic matrix is deposited by either high velocity oxygen fuel thermal spraying, or high-velocity air-fuel spraying. Hard backing 118 deposited by the high velocity air fuel technique may provide nano-retention, lesser decarburization, finer spacing between hard particles, and lesser embrittlement of the binder used during deposition.

In one embodiment, the hard backing 118 includes nickel coatings with either phosphorous or boron additive. While such coatings have a hardness in the range of from about 700 Vickers Hardness to about 1000 Vickers Hardness, the wear resistance and hardness may be further improved by adding hard particles to the matrix by co-deposition. The hard particles added may include silicon carbide, silicon nitride, alumina, cubic boron nitride, or diamond.

Generally, the plurality of nano-layers 120 has different characteristics from one another. For example, the plurality of nano-layers 120 may include a plurality of alternating first layers 122 and second layers 124. The first layer 122 comprises a first material and the second layer 124 comprises a second material different from the first material. The first material comprises a material including a metal nitride, or a metal boride, or a metal carbide, or a combination thereof. The second material includes a material including a metal, or a metal nitride, or a metal boride, or a metal carbide, or a combination thereof. In an exemplary embodiment, the nano-layers 120 include alternate layers of metal carbides such as TiC/ZrC. In another exemplary embodiment, the nano-layer 120 includes alternate layers of metal nitrides such as TiN/ZrN. In yet another exemplary embodiment, the nano-layer 116 includes alternate layers of a metal nitride and a metal carbide such as TiN/TiC. In certain embodiments, metal layers may be included between the nitride or carbide layers. In an exemplary embodiment, the nano-layers 120 include alternate layers of a metal and a metal nitride such as TiN/Ti/TiN.

The nano-layers 120, components and associated methods of manufacture of the present invention, generally provide higher hardness and better wear resistance, impact resistance, erosion resistance and clearance control than would otherwise be predicted by the rule of mixtures. This is because when alternating layers of materials with different elastic moduli and crystal structures are brought together, the resistance to dislocation movement through the structure as a whole increases.

In certain embodiments, the thickness of each of the plurality of first layers 122 and second layers 124 is in the range of from about 3 nanometers to about 500 nanometers. In other embodiments the thickness is in the range of from about 10 nanometers to about 200 nanometers. In some embodiments, the thickness is in the range of from about 20 nanometers to about 100 nanometers. The thickness of the individual layers 122, 124 may be independently adjusted to control the hardness, strain tolerance and overall stability of the nano-layer coatings when subjected to thermo-mechanical stresses. The total thickness of the nano-layers 120 may range from about 1 micron to about 25 microns. In some embodiments, the total thickness is in the range of from about 1 micron to about 20 microns. In other embodiments, the total thickness is in the range of from about 5 microns to about 10 microns. The number of first layer 124 and second layers 124 utilized may vary, depending upon the thickness of each of the layers and the desired thickness of the nano-layers 120. The total thickness of the coatings depends on the components that are to be operated and may be constrained by the total space available between the contacting parts.

In an exemplary embodiment, a wear resistant coating 116 comprises a hard backing 118 comprising cobalt chromium alloy dispersed with micron to submicron sized tungsten carbide particles and a plurality of alternate TiN and ZrN nano-layers 120 disposed on the hard backing 118. In an exemplary embodiment, a wear resistant coating 116 includes a hard backing 118 including a metal alloy dispersed with a plurality of particles of metal oxide, wherein the metal alloy comprises a material including nickel or cobalt or iron; and a plurality of alternate metal nitride nano-layers 120 disposed on the hard backing 118. Disposing nano-layers 120 on the wear resistant hard backing 118 introduces a gradual gradient in hardness, prevents premature buckling of the nano-layers 120 and hence increases the hardness and wear resistance of the entire coating 126.

The wear resistant coating is suitable for moderately high operating temperatures. In one embodiment, the wear resistant coating 116 is thermally stable up to at least about temperature of at least about 500 °C, in another embodiment at least about 600°C, in yet another embodiment at least about 700°C. The nano-layer coatings retain morphological stability at temperatures well above the anticipated operating temperature range. The nano-layers of the invention retain adequate oxidation resistance till about 650°C, which is well above the anticipated operating temperature range of variable stator vanes. The underlying hard backing has a thermal stability up to about 500°C. For higher temperature ranges the composition of the hard backing may be changed to a superalloy matrix with gamma prime formers reinforced with a more thermally stable hard particle such as chromium carbide or aluminum oxide.

FIG. 7 illustrates an exemplary embodiment of a wear resistant coating 126 including the plurality of nano-layers 120 disposed on the hard backing 118 as illustrated in FIG. 6, further illustrating a lubricating layer 128 disposed over the nano-layers 120. The lubricant material of the lubricating layer 128 may be selected to be stable up to the operating temperature of the coated article, and under low moisture conditions. The lubricant material may include tungsten disulphide, or molybdenum disulfide, or hexagonal boron nitride, or tungsten telluride, or tungsten selenide, or molybdenum telluride, or molybdenum telluride, or combinations thereof. In an exemplary embodiment, the lubricant is tungsten disulphide. Tungsten disulphide provides low friction properties at temperatures up to about 550°C, even in the absence of moisture, which is typically the case at high altitudes (>35,000 ft).

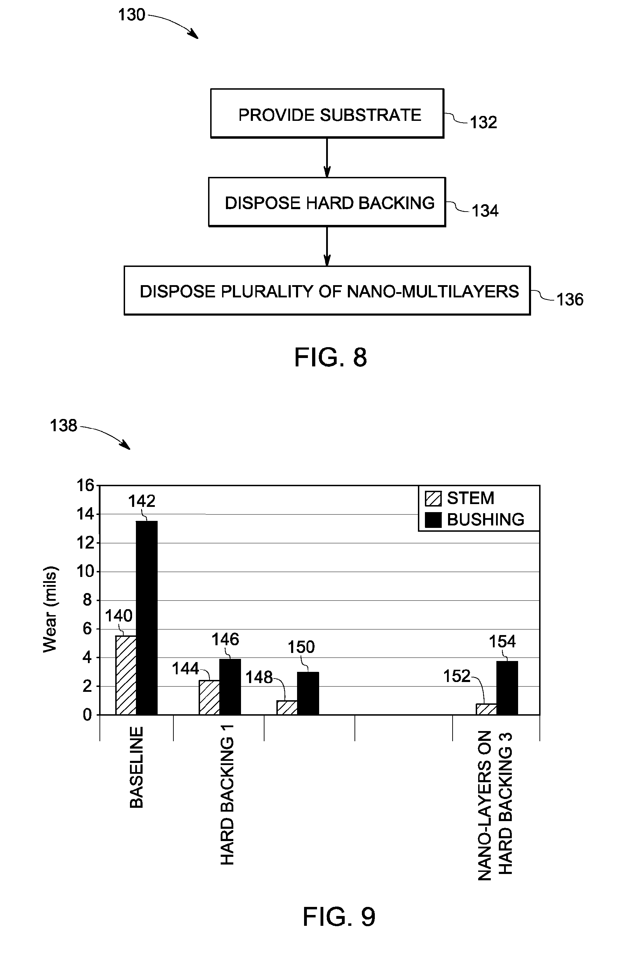

Embodiments of the present technique also include a method for making a wear resistant coating, such as described in detail above. FIG. 8 is a flow chart illustrating a method according to one embodiment of the invention. The method 130 comprises the steps of providing a substrate 121 in step 132; disposing a hard backing 118 in step 134; and disposing a plurality of nano-layers 120 on the hard backing in step 136.

The process of applying the coating begins by preparing the substrate surface to be coated. The first step is to remove debris and oxides from the substrate. Well known cleaning techniques such as degreasing, grit blasting, chemical cleaning, and/or electrochemical polishing may be used to obtain desired surface cleaning and finish.

Disposing the hard backing in step 134 comprises a method including electroless deposition, or high velocity oxygen fuel thermal spraying, or activated combustion high-velocity air-fuel spraying or electron beam physical vapor deposition. In some embodiments, the hard backing is metal alloy matrix deposited by either high velocity oxygen fuel thermal spraying, or activated combustion high-velocity air-fuel spraying. Hard backings deposited by these techniques advantageously provides nano-retention, lesser decarburization, finer spacing between hard particles and lesser embrittlement of the binder. Electroless deposition is also used when the hard backing includes nickel coating with boron or phosphorus doping. Hard particles may be dispersed in the electroless nickel matrix to further improve wear properties. Disposing the plurality of nano-layers in step 136 comprises physical vapor deposition.

Another aspect of the invention is to provide an article. The article includes a component; and a wear resistant coating disposed on the component. The wear resistant coating comprises a hard backing including a metal alloy matrix dispersed with a plurality of hard particles; and a plurality of nano-layers disposed on the hard backing. The hard backing includes any hard superalloy dispersed with a plurality of hard particles. The coating comprises a plurality of nano-layers disposed on the hard backing. The attributes of the hard backing and the nano-layers are described in the wear resistant coating embodiments above. The article includes a machine having components coated with wear resistant coatings of the invention that moves along one another. The article includes an engine having the component coated with the wear resistant coating of the invention. The engine includes a turbine engine having a variable stator vane, wherein the variable stator vane comprises the component. The engine includes a turbine engine having a variable stator vane including a trunnion and a bushing, wherein the bushing has an inner surface in contact with an outside surface of the trunnion, and wherein the inner surface of the bushing and the outer surface of the variable stator vane are coated with the wear resistant coating. The article includes a transportation vehicle having the component. In an exemplary embodiment, the transportation vehicle is an aircraft.

The use of hard backings as a buffer between the nano multilayered coating and a tough but ductile substrate helps in providing a tribo-system that is capable of sustaining high surface loads, but providing high wear resistance. Therefore, the wear-resistant coatings according to some embodiments of the present invention are suitable for any kind of substrate and are stable up to relatively high temperatures.

The embodiments of the invention described above, serve as a generic template to protect components from fretting wear, sliding wear, and friction under conditions where external lubrication is not possible. While the embodiments of the invention are described with respect to variable stator vanes and bushings in aircraft engines, the concepts described in this invention may be used in other application, where fretting wear under similar operating conditions remains an issue. In addition, the described invention may also be utilized under sliding wear conditions for similar material contact surfaces.

The following example serves to illustrate the features and advantages offered by the embodiments of the present invention, and are not intended to limit the invention thereto.

### Example 1

The outer surface of the stem of the variable stator vane was coated with various hard backing compositions by, activated combustion high velocity oxy fuel process, activated combustion high velocity air fuel process, and electroless Ni-diamond composite coating process. These coatings are named Hard Backing 1, 2 and 3 respectively. Hard backing 1 was a cobalt with a dispersion of tungsten carbide thermal spray through High Velocity Oxy Fuel process. Hard backing 2 was a cobalt chromium with a dispersion of tungsten carbide thermal spray through Activated combustion High Velocity Air Fuel process. Hard backing 3 was an electroless nickel-hard particle composite plating. The particle size of the tungsten carbide was between 0.2 to 5 micrometers. The coating thickness was 150 to 200 micrometers. The part with hard backing 3 was then further coated with alternate multilayers of titanium nitride (TiN) and zirconium nitride (ZrN) using PVD cathodic arc technique, wherein each layer was of thickness 120 nanometers. The total thickness of the TiN/ZrN multilayer system was 8 micrometers. The wear of the coated parts was measured using a customized test rig that simulates the operating conditions of the part in reciprocating motion. The coated stem was run against a bushing of Stellite 6. The test was run for 100 hours on the test rig and wear of both the bushing as well as the stem coating were measured.

Wear was plotted for parts coated with different hard backings and the plot 138 is shown in figure 9. Bars 140 and 142 indicate the wear of the stem and the bushing without any coating and form a base line. Bars 144 and 146 indicate the wear of the stem and the bushing with hard backing 1 respectively. Bars 148 and 150 indicate the wear of the stem and the bushing with hard backing 2 respectively. Bars 152 and 154 indicate the wear of the stem and the bushing with hard backing 3 along with the nano-layer coating of TiN/ZrN respectively. The plot 138 indicates that compared to baseline uncoated samples, the hard backings 1 and 2 show about 4 - 6 times lower wear on the Trunnion.

### Example 2

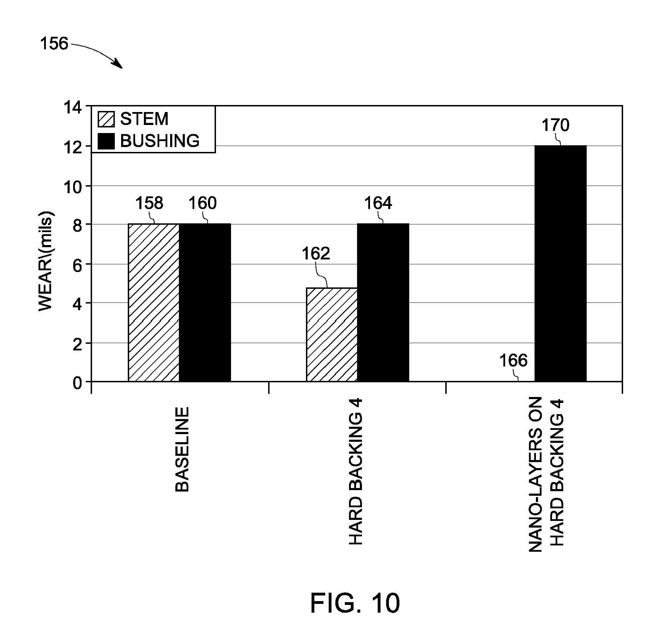

The outer surface of the stem of the variable stator vane was coated with nano-layers of TiN and ZrN to a thickness of 8 micrometers. This was run against Stellite 6 bushings in the simulated test in a test rig for 8 hours. Another stem was first coated with hard backing 4 which is a electroless Nickel diamond composite plating to a thickness of 200 microns on which an 8 micron PVD coating of TiN/ZrN nano-layers of total thickness of 8 microns was deposited. The layer thickness for each of TiN and ZrN was 120 nm. This was also run under the similar operating conditions as in example 1. Figure 10 shows plot 156 illustrating the wear comparison of the above 2 coatings compared to the uncoated specimen. Bars 158 and 160 indicate the wear of the stem and the bushing without any coating respectively. Bars 162 and 164 indicate the wear of the stem and the bushing with nano-layers of TiN/ZrN without any hard backing respectively. Bars 166 and 168 indicate the wear of the stem and the bushing with hard backing 4 along with TiN/ZrN nano-layers respectively. The wear of the TiN/ZrN coated stem 162 is 40 % lower than the uncoated specimen 158. However, the stem with TiN/ZrN on a hard backing 4 shows no wear in the 8 hour test at all (bar 166), indicating a tremendous improvement over the uncoated specimen.

While only certain features of the invention have been illustrated and described herein, many modifications and changes will occur to those skilled in the art. For example, though in the preceding paragraphs embodiments refer to an aircraft engine, it is valid for other components similarly exposed to mechanical, chemical and thermal stress. It is, therefore, to be understood that the appended claims are intended to cover all such modifications and changes as fall within the true spirit of the invention.

## Claims

1. A wear resistant coating (116), comprising:
a hard backing (118) comprising a metal alloy matrix dispersed with a plurality of hard particles; and
a plurality of nano-layers (120) disposed on the hard backing (118), wherein the plurality of nano-layers (120) have different characteristics from one another.

2. The wear resistant coating (116) of claim 1, wherein the hard backing (118) has a hardness value of at least about 700 Vickers Hardness.

3. The wear resistant coating (116) of claim 1, wherein the metal alloy matrix comprises a material including cobalt, or cobalt chromium alloy, or cobalt alloy, or nickel alloy, or ferrous alloy, or nickel chromium aluminum alloy, or cobalt nickel chromium aluminum yttrium alloy, or nickel cobalt chromium tungsten alloy, or cobalt molybdenum chromium silicon alloy.

4. The wear resistant coating (116) of claim 1, wherein the plurality of hard particles comprise a material including tungsten carbide, or titanium carbide, or chromium carbide, or silicon carbide, or diamond, or titanium nitride, or silicon nitride, or cubic boron nitride, or titanium boride, or chromium oxide, or aluminium oxide, or zirconium oxide, or silicon oxide, or combinations thereof.

5. The wear resistant coating (116) of claim 1, wherein the nano-layer (120) comprises a material including a metal nitride, or a metal boride, or a metal carbide, or a combination thereof.

6. The wear resistant coating (116) of claim 1, wherein the hard backing (118) has a thickness in a range of from about 5 microns to about 500 microns.

7. A wear resistant coating (116) comprising:
a hard backing (118) comprising cobalt chromium alloy dispersed with nanoparticles of tungsten carbide; and
a plurality of alternate TiN and ZrN nano-layers disposed on the hard backing (118).

8. An article, comprising:
a component;
a wear resistant coating (116) disposed on the component, wherein the wear resistant coating (116) comprises a hard backing (118) comprising a metal alloy matrix dispersed with a plurality of hard particles; and a plurality of nano-layers (120) disposed on the hard backing (118).

9. The article of claim 8, wherein the article comprises an engine having the component.

10. The article of claim 9, wherein the engine comprises a turbine engine having a variable stator vane, wherein the variable stator vane comprises the component.

11. The article of claim 10, wherein the engine comprises a turbine engine having a variable stator vane comprising a trunnion and a bushing, wherein the bushing has an inner surface in contact with an outside surface of the trunnion, and wherein the inner surface of the bushing and the outer surface of the variable stator vane are coated with the wear resistant coating (116).

12. The article of claim 11, wherein the article comprises a transportation vehicle having the component.
